## Europäisches Patentamt
## European Patent Office
## Office européen des brevets

(19)

(11) Veröffentlichungsnummer: **0 115 794**
**B1**

(12)

# EUROPÄISCHE PATENTSCHRIFT

(45) Veröffentlichungstag der Patentschrift:
15.10.86

(51) Int. Cl.⁴: **F 16 H 57/02**

(21) Anmeldenummer: 84100361.9

(22) Anmeldetag: 14.01.84

(54) Zahnräderwechselgetriebe.

(30) Priorität: 24.01.83 DE 3302185

(43) Veröffentlichungstag der Anmeldung:
15.08.84 Patentblatt 84/33

(45) Bekanntmachung des Hinweises auf die Patenterteilung:
15.10.86 Patentblatt 86/42

(84) Benannte Vertragsstaaten:
AT DE FR GB IT

(56) Entgegenhaltungen:
DE-A-2 046 316
DE-A-3 204 968
DE-B-1 284 804
DE-C-577 667
FR-A-2 399 589
GB-A-1 413 672
US-A-1 639 812
US-A-4 354 401

(73) Patentinhaber: Klöckner- Humboldt- Deutz
Aktiengesellschaft, Deutz- Mülheimer- Strasse
111 Postfach 80 05 09, D-5000 Köln 80 (DE)

(72) Erfinder: Zenker, Walter, Pippelstein 49, D-5060
Bergisch Gladbach 3 (DE)

## Beschreibung

Die Erfindung bezieht sich auf ein Zahnräderwechselgetriebe mit einer oder mehreren durch je eine reibschlüssige Schaltkupplung unter Last schaltbaren Schaltgruppen, bei denen die Achsen der durch Federkraft und/oder Druckmittel ein- bzw. ausrückbaren Schaltkupplungen bzw. der als Vorgelege ausgebildeten Schaltgruppen achsparallel zu der mit der Kraftmaschine verbundenen und zentral in Getriebegehäuse geführten Antriebswelle verlaufen. Ein derartiges getribe ist in der DE-A-2 841 053 beschrieben.

Aus der DB-C-577 667 ist ein Zahnräderwechselgetriebe bekanntgeworden, das insbesondere für Kraftfahrzeuge vorgesehen ist. Das Getriebegehäuse weist an seiner Oberseite einen abnehmbaren Deckel auf, der bei Abnahme eine Öffnung zum Inneren des Getriebegehäuses freigibt. Diese Öffnung ist so bemessen und ausgebildet, daß durch diese in einem Lagerkörper angeordnete Wellen und Zahnräder insgesamt aus- bzw. eingebaut werden können. Bei dieser bekannten Ausbildung eines Zahnräderwechselgetriebes sind jedoch der Deckel sowie der Lagerkörper für die Getriebeteile als zwei getrennte Bauteile ausgebildet, was herstellungstechnisch aufwendig und bezüglich der Handhabung umständlich ist.

Der Erfindung liegt die Aufgabe zugrunde, unter Vermeidung der geschilderten Nachteile ein Zahnräderwechselgetriebe der eingangs umrissenen Gattung zu schaffen, dessen grundlegende Bauweise je nach Erfordernis den Einbau einer oder mehrerer Lastschaltgruppen bzw. deren Austausch ohne Demontage des Getriebes in möglichst einfacher Weise gestattet.

Die Aufgabe wird erfindungsgemäß dadurch gelöst, daß die unter Last schaltbaren Schaltgruppen mit der bzw. den zugeordneten Schaltkupplungen als geschlossene Baugruppen in an sich bekannter Weise von außen in das Getriebe durch mittels Deckel verschließbare Öffnungen im Getriebegehäuse einfügbar sind und daß jede der Schaltgruppen des Getriebes an dem Deckel mit Tragarmen angeordnet ist, der als Verschluß der entsprechenden Öffnung im Getriebegehäuse bei eingebauter Schaltgruppe dient.

Hierdurch wird erreicht, daß für die Herstellung von Zahnräderwechselgetrieben mit unterschiedlicher Anzahl von Lastschaltstufen nur eine Grundausführung eines Getriebes erforderlich ist, in das dann an der dafür vorgesehenen Stelle von außen die lastschaltbare Baugruppen bzw. Baugruppen eingefügt werden. Auch eine nachträgliche Umrüstung eines solchen Getriebes bzw. der Austausch einer Lastschaltgruppe wegen eines Defektes beispielsweise der Schaltkupplung läßt sich einfach und schnell durchführen.

Gemäß einer vorteilhaften Weiterbildung der Erfindung sind die Öffnungen zum Einsetzen der Schaltgruppen an gegenüberliegenden Seiten des Getriebegehäuses angeordnet.

Schließlich ist es zweckdienlich, wenn die unter Last schaltbaren Schaltgruppen des Getriebes im Kraftverlauf vor der Fahrkupplung angeordnet sind.

Die Erfindung wird im folgenden anhand eines Ausführungsbeispiel unter Bezugnahme auf die Zeichnung näher beschrieben. Es zeigt:

Fig. 1 schematisch ein unter Last schaltbares Getriebe gemäß der Erfindung;

Fig. 2 einen Schnitt nach der Linie II-II in Fig. 1 um 90° verdreht.

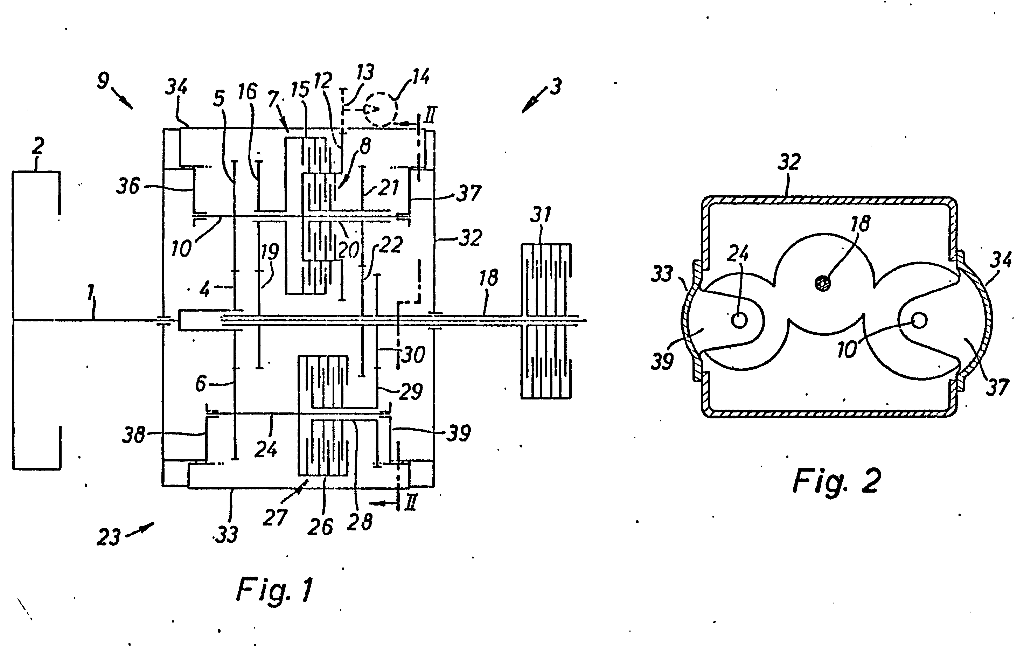

Gemäß Fig. 1 ist eine Antriebswelle 1 einenends über ein Schwungrad 2 mit einer nicht gezeigten Antriebsmaschine (Kraftmaschine) gekoppelt. Anderenends steht die Antriebswelle 1 mit einem unter Last schaltbaren Vorgelege 3 eines Zahnräderwechselgetriebes in Verbindung. Dabei kämmt ein auf der Antriebswelle 1 drehfestes Zahnrad 4 ständig mit zwei Zahnrädern 5 und 6. Zahnrad 5 ist Teil einer zwei kombinierte Schaltkupplungen 7 und 8 aufweisenden Schaltgruppe 9 und sitzt drehfest auf einer zu dieser zentralen Welle 10. Die beiden Schaltkupplungen 7 und 8, von denen eine durch Druckmittel und die andere durch Federkraft einrückbar ist, haben einen gemeinsamen inneren Lamellenträger, der ebenfalls drehfest mit der Welle 10 verbunden ist. Der Lamellenträger ist seinerseits als Zahnrad 12 ausgebildet und treibt über ein damit kämmendes Zahnrad 13 beispielsweise ständig eine Hydraulikpumpe 14 an. Die Schaltkupplung 7 ist über ihren äußeren Lamellenträger 15 ständig mit einem Zahnrad 16 gekoppelt, welches mit einem auf einer Hohlwelle 18 drehfest angeordneten Zahnrad 19 in Eingriff steht. Auch der äußere Lamellenträger 20 der Schaltkupplung 8 trägt drehfest ein Zahnrad 21, das sich mit einem auf der Hohlwelle 18 drehfesten Zahnrad 22 im Eingriff befindet.

Bei eingerückter Schaltkupplung 7 steht die Antriebswelle 1 über die Zahnräder 4, 5 sowie die Schaltkupplung 7 und die Zahnräder 16, 19 mit der Hohlwelle 18 antriebsmäßig in Verbindung, während bei eingerückter Schaltkupplung 8 die Antriebswelle 1 über die Zahnräder 4, 5, die Schaltkupplung 8 sowie die Zahnräder 21, 22 mit der Hohlwelle 18 antriebsmäßig verbunden ist.

Das Zahnrad 6 ist Teil einer Schaltgruppe 23, und sitzt drehfest auf einer Welle 24, die starr mit dem äußeren Lamellenträger 26 einer Schaltkupplung 27 verbunden ist. Die Schaltkupplung 27 steht mit ihrem inneren Lamellenträger 28 über Zahnräder 29 und 30 mit der Hohlwelle 18 in Verbindung. Auf diese Weise ist bei eingerückter Schaltkupplung 27 die Antriebswelle 1 über die Zahnräder 4, 6, die Schaltkupplung 27 sowie die Zahnräder 29 und 30 mit der Hohlwelle 18 antriebsmäßig gekoppelt.

An die Hohlwelle 18 ist abtriebsseitig eine Fahrkupplung 31 angeschlossen, die mit einem nicht gezeigten Schaltgetriebe in Verbindung steht. Das Vorgelege 3 ist in einem mehrteiligen Gehäuse 32 untergebracht.

Die Schaltgruppen 9 und 23 sind als geschlossene Baugruppen ausgebildet und als solche gemäß Fig. 2 mit je einem bogenförmig ausgebildeten Deckel 33 bzw. 34 als Tragelement versehen. An jedem Deckel 33, 34 sind zwei in das Gehäuse 32 hineinragende Tragarme 36, 37 bzw. 38, 39 befestigt, die als Lagerträger der Welle 10 bzw. 24 der beiden Schaltgruppen 9 bzw. 23 dienen. Die Deckel 32, 33 stützen sich bei eingebauter Schaltgruppe 9 bzw. 23 außen auf dem Gehäuse ab und sind auf diesem zentriert sowie daran mittels nicht gezeigter Schrauben verspannt. Durch diese Anordnung kann beispielsweise eine Schaltgruppe mit einém schadhaften Bauteil ohne Demontage des Getriebes leicht ausgebaut und durch eine andere entsprechende Schaltgruppe ersetzt werden. Es besteht bei dieser Bauweise eines Getriebes aber auch die Möglichkeit, für mehrere Schleppertypen ein Getriebe dieses grundsätzlichen Aufbaues zu verwenden, in das dann bei der Montage die jeweils für den Schleppertyp erforderlichen Schaltgruppen eingesetzt werden. Entfällt dabei eine der Schaltgruppen, kann die im Gehäuse vorhandene Öffnung durch einen einfachen Deckel verschlossen werden.

**Patentansprüche**

1. Zahnräderwechselgetriebe mit einer oder mehreren durch je eine reibschlüssige Schaltkupplung (7, 8, 27) unter Last schaltbaren Schaltgruppen (9, 25), bei denen die Achsen der durch Federkraft und/oder Druckmittel ein- bzw. ausrückbaren Schaltkupplungen (7, 8, 27) bzw. der als Vorgelege ausgebildeten Schaltgruppen (9, 23) achsparallel zu der mit der Kraftmaschine verbundenen und zentral im Getriebegehäuse (52) geführten Antriebswelle (1) verlaufen, dadurch gekennzeichnet, daß die unter Last schaltbaren Schaltgruppen (9, 23) mit der bzw. den zugeordneten Schaltkupplungen (7, 8 bzw. 27) als geschlossene Baugruppen in an sich bekannter Weise von außen in das Getriebe (3) durch mittels Deckel (33 bzw. 34) verschließbare Öffnungen im Getriebegehäuse (32) einfügbar sind und daß jede der Schaltgruppen (9, 25) des Getriebes (3) an dem Deckel (33 bzw. 54) mit Tragarmen (36, 37 bzw. 38, 39) angeordnet ist, der als Verschluß der entsprechenden Öffnung im Getriebehehäuse (32) bei eingebauter Schaltgruppe (9, 23) dient.

2. Zahnräderwechselgetriebe nach Anspruch 1, dadurch gekennzeichnet, daß die Öffnungen zum Einsetzen der Schaltgruppen (9, 25) an gegenüberliegenden Seiten des Getriebegehäuses (52) angeordnet sind.

3. Zahnräderwechselgetriebe nach einen der vorhergehenden Ansprüche, dadurch gekennzeichnet, daß die unter Last schaltbaren Schaltgruppen (9, 25) des Getriebes (3) im Kraftverlauf vor der Fahrkupplung (31) angeordnet sind.

**Claims**

1. A gear transmission including one or more gear-change groups (9, 23) each of which is load-changeable via a respective friction clutch (7, 8, 27), in which the respective spindle of each of the clutches (7, 8, 27) which are engageable and disengageable by means of spring tension and/or by means of a pressure medium - and, respectively, of each of the gear-change groups (9, 23), which serve to operate as intermediate gears, is arranged parallel with the main shaft (1) connected to a prima mover and disposed centrally in a gear box (32), characterized in that each load-changeable gear group (9, 23) including the respective clutch, or clutches, (7, 8 and 27 respectively) associated therewith is a self-contained sub-assembly insertable - as known per se - into the transmission (3) across apertures provided in the gear box (32), that each of the apertures is arranged to be closed by a respective cover (33 and 34 respectively), that each of the transmission's (3) gear-change groups (9, 23) is secured to a respective one of the covers (33 or 34) by means of brackets (37, 37 and 38, 39 respectively), and in that, after the installation of the gear groups in the gear box (32), each cover serves to close a respective one of the latter's apertures.

2. A gear transmission according to claim 1, characterized in that the apertures for inserting the gear-change groups (9, 23) are provided in opposite walls of the gear box (32).

3. A gear transmission according to claim 1 or claim 2, characterized in that the load-changeable gear groups (9, 23) of the transmission (3) are located, in relation to the power transmission, upstream of a drive clutch (31).

**Revendications**

1°) Boîte de vitesses à pignon denté comportant un ou plusieurs groupes de commutations (9, 23) commutables sous charge, par un embrayage (7, 8, 27) à friction, respectif, et dont les axes des embrayages (7, 8, 27) susceptibles d'être embrayés ou débrayés par la force développée par un ressort et/ou par un agent de pression, ou encore des groupes de commutations (9, 23) réalisés comme transmissions intermédiaires, sont reliés suivant un axe parallèle à l'axe du moteur et sont disposés centralement à l'arbre-moteur (1) passant dans la boîte de transmission (32), caractérisée en ce que les groupes de commutations (9, 23) commutables sous charge et le ou les groupes de commutations (7, 8 ou 27) correspondants, sont susceptibles d'être introduits comme groupes constructifs fermés, de façon connue en soi, a l'extérieur, dans la boîte de vitesses (3) à travers des orifices prévus dans le boîtier (32) de la boîte de vitesses et susceptibles d'être fermés par des couvercles (33, 34) et en ce que chacun des groupes de commutation (9, 23) de la boîte de vitesses (3) est relié au couvercle (33 ou 34) par des bras de support (36, 37 ou 38, 39), le couvercle servant de moyen de fermeture de l'ouverture correspondante du boîtier (32) de la boîte de vitesses lorsque le groupe de commutation (9, 23) est monté.

2°) Boîte de vitesses à pignon denté selon la revendication 1, caractérisée en ce que les ouvertures sont prévues sur le côté opposé du boîtier (32) de la boîte de vitesses pour la mise en place des groupes de commutations (9, 23).

3°) Boîte de vitesses à pignon denté selon l'une des revendications précédentes, caractérisée en ce que les groupes de commutations (9, 23) de la boîte de vitesses (3) commutables sous charge sont prévus dans la ligne de passage des forces en amont de l'embrayage de route (31).

Fig. 1

Fig. 2